# EUROPÄISCHE PATENTSCHRIFT

(11) **EP 3 099 960 B1**
(45) Veröffentlichungstag und Bekanntmachung des Hinweises auf die Patenterteilung: **29.11.2017**
(21) Anmeldenummer: 15704484.3
(22) Anmeldetag: 30.01.2015
(51) Int. Cl.: F16H 61/26

(54) **KRAFTÜBERTRAGUNGSVORRICHTUNG FÜR EIN GETRIEBE**
FORCE TRANSMISSION DEVICE FOR A TRANSMISSION
DISPOSITIF DE TRANSFERT DE PUISSANCE POUR UNE BOÎTE DE VITESSES

(30) Priorität: 31.01.2014 DE 102014101189
(43) Veröffentlichungstag der Anmeldung: 07.12.2016
(73) Patentinhaber: HS Products Engineering GmbH, 82216 Maisach (DE)
(72) Erfinder: DORSCHEL, Florian, 82211 Herrsching (DE); HECKMAYR, Thomas, 86871 Rammingen (DE); JULLING, Ullrich, 83209 Prien (DE); SPECHT, Martin, 82340 Feldafing (DE)
(74) Vertreter: Patentanwälte Bals & Vogel
(86) Internationale Anmeldenummer: PCT/EP2015/051977
(87) Internationale Veröffentlichungsnummer: WO 2015/114109

(56) Entgegenhaltungen:
- EP-A1- 1 571 378
- DE-A1-102010 015 037
- DE-U1- 29 812 605

## Beschreibung

Die vorliegende Erfindung betrifft eine Kraftübertragungsvorrichtung für ein Getriebe, insbesondere eines Motorrades, mit einem Schaltassistenzsystem sowie ein Verfahren für die Montage einer derartigen Kraftübertragungsvorrichtung.

Es ist bekannt, dass Fahrzeuge, insbesondere Motorräder, mit Schaltassistenzsystemen ausgestattet werden. Ein Schaltassistenzsystem ist dahingehend zu verstehen, dass es den Schaltvorgang zwischen zwei Gängen für das Fahrzeug unterstützt. Beispielsweise kann bei der Anwendung eines Schaltassistenzsystems für ein Motorrad der Schaltwunsch erkannt und für eine Schaltvorbereitung verwendet werden. Eine derartige Vorbereitung zielt zum Beispiel auf die Synchronisation der Getrieberäder der zu schaltenden Gänge ab. Dies kann soweit führen, dass auf Basis dieser Synchronisation der zu schaltenden Gänge aus geometrischer Sicht ein Kuppelvorgang bei diesem Schaltvorgang unterbleiben kann. So kann ein Schaltassistenzsystem den Komfort beim Führen eines Fahrzeugs, insbesondere eines Motorrades, deutlich verbessern. Durch die Möglichkeit des Synchronisierens erlaubt das Schaltassistenzsystem weiter, dass ein Verschleiß innerhalb des Getriebes, insbesondere entsprechender Synchronisationsmittel, reduziert wird oder sogar minimiert wird. Selbstverständlich kann ein solches Schaltassistenzsystem auch bei Getrieben ohne Synchronisationsmöglichkeit eingesetzt werden. Um ein Schaltassistenzsystem in bekannter Weise betreiben zu können, ist als Eingangsparameter ein Schaltwunsch des Fahrers notwendig. Dieser ist mit möglichst hoher Sicherheit zu detektieren und insbesondere zu unterscheiden hinsichtlich eines Wunsches für ein Heraufschalten und hinsichtlich eines Wunsches für ein Herabschalten. Je nach Schaltwunschrichtung wird dementsprechend durch das Schaltassistenzsystem zum Beispiel eine Beschleunigung oder ein Abbremsen der aktuellen Motorleistung für einen kurzen Zeitraum gewährleistet. Weiter ist sicherzustellen, dass noch vor Durchführung des tatsächlichen Schaltvorganges der entsprechende Schaltwunsch an das Schaltassistenzsystem übermittelt werden könnte.
Bei bekannten Lösungen wird der Schaltwunsch zum Beispiel durch Federsysteme detektiert. Diese befinden sich üblicherweise zwischen dem Schalthebel beziehungsweise der Schalthebelvorrichtung und dem Getriebe. Solche Federvorrichtungen erlauben Relativbewegungen, welche am Schalthebelausgang relativ zum Getriebeeingang erfolgen können. Nachteilhaft bei diesen Lösungen ist es, dass diese zusätzlichen Bauteile bereits bei der Herstellung und Konstruktion des Fahrzeugs berücksichtigt und eingebaut werden müssen. Ein Nachrüsten einer derartigen Systematik ist nicht möglich. Neben dieser Grundproblematik ist zusätzlicher Platzbedarf für solche Schaltassistenzsysteme, beziehungsweise diese Schaltwunscherkennung, notwendig. Ein solcher Platzbedarf ist insbesondere bei Fahrzeugen in Form von Motorrädern nur selten gegeben und muss explizit durch entsprechende Konstruktion geschaffen werden. Neben dem Platzbedarf sind auch zusätzliche Kosten durch dieses zusätzliche Bauteilsystem sowie entsprechendes zusätzliches Gewicht ein großer Nachteil bekannter Lösungen. Aus der EP 1 571 378 A1 die alle Merkmale des Oberbegriffs des Anspruchs 1 offenbart, der DE 10 2010 015 037 A1 sowie der DE 298 12 605 U1 sind Schalteinrichtungen für Motorräder bekannt, welche eine Speichervorrichtung, wie z.B. einer Torsionsfeder, zum Speichern einer Betätigungsenergie aufweisen.

Es ist Aufgabe der vorliegenden Erfindung, die voranstehend beschriebenen Nachteile zumindest teilweise zu beheben. Insbesondere ist es Aufgabe der vorliegenden Erfindung, einen Schaltwunsch zu detektieren bei reduziertem Platzbedarf und/oder geringerem Gewicht und bevorzugt bei gegebener Nachrüstbarkeit.
Voranstehende Aufgabe wird gelöst durch eine Kraftübertragungsvorrichtung mit den Merkmalen des Anspruchs 1 und ein Verfahren mit den Merkmalen des Anspruchs 12. Weitere Ausgestaltungen der Erfindung ergeben sich aus den abhängigen Ansprüchen. Eine erfindungsgemäße Kraftübertragungsvorrichtung für ein Getriebe, insbesondere eines Motorrades, mit einem Schaltassistenzsystem weist eine Schalteingangswelle mit einem Schalthebelanschluss zur Aufnahme einer Schaltbewegung eines Schalthebels auf. Weiter ist ein Getriebeanschluss zur Weiterleitung der Schaltbewegung an eine Schaltkulisse des Getriebes vorgesehen. Eine erfindungsgemäße Kraftübertragungsvorrichtung zeichnet sich dadurch aus, dass die Schalteingangswelle einen Kraftspeicher für die Zwischenspeicherung wenigstens eines Teils der Schaltkraft aufweist, so dass eine Relativbewegung zwischen dem Schalthebelanschluss und dem Getriebeanschluss unter Änderung der im Kraftspeicher gespeicherten Schaltkraft erfolgen kann. Weiter ist für die Schalthebelvorrichtung eine Sensorvorrichtung vorgesehen für die Erkennung der Relativbewegung zwischen dem Schalthebelanschluss und dem Getriebeanschluss.
Erfindungsgemäß wird nun die Möglichkeit der Schaltwunscherkennung nicht mehr in einer separaten Kraftübertragungsvorrichtung angeordnet, sondern vielmehr in die Schalteingangswelle selbst integriert. Unter einer Schalteingangswelle ist im Sinne der vorliegenden Erfindung der Teil des Getriebes zu verstehen, welcher die Schaltbewegung an die Schaltkulisse des Getriebes weitergibt. Üblicherweise ist die Schaltkulisse des Getriebes um eine Kulissenachse drehbar gelagert. Die Schaltsachse der Schalteingangswelle ist dabei bevorzugt parallel zu dieser Kulissenachse ausgerichtet. Mit anderen Worten befindet sich die Schalteingangswelle im montierten Zustand zumindest zum größten Teil innerhalb des Motorrades, zum Beispiel innerhalb eines Getriebeghäuses. Der Schalthebelanschluss dient nun der direkten oder indirekten Anschlussmöglichkeit eines Schalthebels, welcher zum Beispiel als Tritthebel ausgebildet sein kann.
Die Kraftübertragbungsvorrichtung der vorliegenden Erfindung ist aufgeteilt in drei wesentliche Abschnitte. Dabei handelt es sich um den Schalthebelanschluss, die Schalteingangswelle und den Getriebeanschluss. Der Getriebeanschluss kann nun bei einer erfindungsgemäßen Kraftübertragungsvorrichtung direkt die entsprechende Schaltkraft in das Getriebe weiterleiten. Im Gegensatz zu bekannten Lösungen muss am Getriebeanschluss nun kein separates Schaltsensorsystem mehr angebracht werden, so dass hier kein zusätzlicher Bauraum mehr notwendig ist. Vielmehr ist es möglich, eine bestehende Schalteingangswelle durch eine erfindungsgemäße Kraftübertragungsvorrichtung auszutauschen und damit die erfindungsgemäße Qualität bei diesem Fahrzeug nachzurüsten.
Erfindungsgemäß sind nun zwei Bewegungen zu unterscheiden. Wünscht der Fahrer des Fahrzeugs, einen Schaltvorgang für das Getriebe durchzuführen, so wird er eine entsprechende Schaltkraft auf den Schalthebelanschluss aufbringen und damit diesen in Bewegung setzen. Diese generelle Bewegung ist eine Bewegung des Schalthebelanschlusses relativ zum Fahrzeug. Diese Bewegung hat jedoch zwei Komponenten. Zum Einen befindet sich eine übergeordnete Bewegungskomponente dieses Schalthebelanschlusses relativ zum Fahrzeug bzw. zum Getriebe, zum Anderen kann je nach Kraftsituation eine Relativbewegung des Schalthebelanschlusses auch zum Getriebeanschluss stattfinden. Nachfolgend soll in einzelnen Schritten nun die Funktion des Kraftspeichers mit Bezug auf einen Schaltvorgang näher erläutert werden.
Beginnt der Fahrer mit dem Schaltvorgang, so erhöht er die Schaltkraft am Schalthebelanschluss und startet dessen Relativbewegung zum Fahrzeug. Zu Beginn ist am Getriebeanschluss anliegend die Gegenkraft zum Getriebe noch relativ gering und reicht nicht aus, um den Schaltvorgang in die Wege zu leiten. Dementsprechend bewegt sich der Getriebeanschluss nicht, während sich der Schalthebelanschluss durch das Vergrößern der Schaltkraft bewegt. Diese Relativbewegung wird zugelassen aufgrund der Tatsache, dass die Schalteingangswelle innerhalb des Kraftpfades zwischen Schalthebelanschluss und Getriebeanschluss einen Kraftspeicher aufweist, welcher über die Relativbewegung ein Einspeichern der sich vergrößernden Schaltkraft ermöglicht. Das Vergrößern der Schaltkraft im Speicher des Zwischenspeichers erfolgt so lange, bis das Kraftgleichgewicht am Getriebeanschluss die notwendige Schaltkraft erreicht. Mit anderen Worten, vergeht eine definierte Zeitspanne bis zum Erreichen dieser Kraftgleichgewichtssituation für die Schaltkraft, wobei diese Zeitspanne abhängig ist von dem Weg, welcher durch den Schalthebelanschluss relativ zum Getriebeanschluss über diese Zeitspanne zurückgelegt worden ist. Ab dem Erreichen dieses Kraftgleichgewichts findet nun der Schaltvorgang im Getriebe statt. Dadurch reduziert sich beziehungsweise kann sich die Gegenkraft innerhalb des Getriebes reduzieren, so dass es nun langsam oder schlagartig, teilweise oder auch vollständig zu einer Entspannung des Kraftspeichers und damit einem Freigeben der Schaltkraft kommt. Dementsprechend kann dieser Schaltvorgang nun durchgeführt werden durch die im Kraftspeicher gespeicherte Schaltkraft und dementsprechend ohne oder nur durch eine geringe Weiterbewegung des Schalthebelanschlusses relativ zum Fahrzeug.
Basierend auf der voranstehenden Erläuterung eines Schaltvorganges wird sichtbar, dass innerhalb der Kraftübertragbungsvorrichtung nun eine Relativbewegung möglich wird, welche Detektionsmöglichkeiten mit sich bringt. Durch die erfindungsgemäß vorgesehene Sensorvorrichtung kann exakt diese Relativbewegung zwischen Schalthebelanschluss und Getriebeanschluss sicher erkannt werden. Vorzugsweise ist diese Sensorvorrichtung und dementsprechend auch Schalthebelanschluss, Getriebeanschluss und Kraftspeicher für eine bifunktionale Ausführungsweise ausgebildet. Darunter ist zu verstehen, dass sowohl ein Heraufschalten, als auch ein Herunterschalten nach dem voranstehend beschriebenen Muster erfolgen kann.

Als Sensorvorrichtung kann im Sinne der vorliegenden Erfindung jede Vorrichtung eingesetzt werden, welche in der Lage ist, die definierte Relativbewegung zwischen Schalthebelanschluss und Getriebeanschluss zu detektieren. Beispielsweise können hier elektrische oder elektronische Sensoren wie Hall-Sensoren oder Widerstandssensoren eingesetzt werden. Auch einfache mechanische Schalter oder optische Systeme sind im Sinne der vorliegenden Erfindung selbstverständlich denkbar. Kern der Sensorvorrichtung ist die Möglichkeit der Erkennung der Relativbewegung, wobei selbstverständlich eine redundante Auslegung einer solchen Sensorik von Vorteil sein kann.

Ein entscheidender Vorteil der vorliegenden Erfindung ist es nun, dass diese Kraftübertragungsvorrichtung eine bestehende Schalteingangswelle an einem Fahrzeug, insbesondere an einem Motorrad, ersetzen kann. Dabei wird es möglich, bestehende Fahrzeuge beziehungsweise bestehende Getriebe auch nachträglich mit dieser Erkennungsmöglichkeit für ein Schaltassistenzsystem vorzubereiten beziehungsweise auszustatten. Bei Neukonstruktionen ist es nun nicht mehr notwendig, zusätzlichen Bauraum für die entsprechende Erkennungsfunktion für das Schaltassistenzsystem zur Verfügung zu stellen. Neben der reduzierten Komplexität führt dies zu deutlich reduzierten Kosten, Platzeinsparung und Gewichtseinsparung für das Getriebe beziehungsweise für das Fahrzeug.

Vorteilhaft bei der vorliegenden Erfindung ist es, dass beim Schaltvorgang insbesondere die gesamte Schaltvorrichtung in Bewegung, insbesondere in Rotation gesetzt wird. Somit bewegt sich, je nach Zeitpunkt während des Schaltvorgangs, sowohl der Schalthebelanschluss als auch der Schalthebel selbst und der Getriebeanschluss. Unter der entsprechenden Bewegung können translatorische, rotatorische oder gemischte Bewegungen verstanden werden, wobei rotatorische Bewegungen beziehungsweise Hebelbewegungen erfindungsgemäß bevorzugt sind.

Die Sensorvorrichtung kann dabei sowohl qualitativ als auch quantitativ arbeiten. So ist es möglich, rein qualitativ zu erkennen, ob beziehungsweise in welcher Richtung die Relativbewegung tatsächlich stattgefunden hat. Quantitative Erkennung kann vorteilhaft sein, wenn eine Fehlerkennung vermieden werden soll. Bei quantitativer Erkennung der Relativbewegung wird es demnach möglich, definierte Schwellenwerte einzustellen und sogar nachträglich zu variieren, um eine Fehlauslösung mit noch höherer Sicherheit zu vermeiden.

Der Kraftspeicher kann eine Federkennlinie aufweisen, um die entsprechende Kraftspeicherfunktion zu erfüllen. Dabei kann die Federkennlinie insbesondere einstellbar beziehungsweise variierbar ausgebildet sein. Zum Beispiel kann die Federkennlinie lineare, progressive und/oder degressive Abschnitte beziehungsweise Ausbildungen aufweisen.

Die Schalteingangswelle einer erfindungsgemäßen Kraftübertragungsvorrichtung kann selbst eine Lagervorrichtung aufweisen für eine bewegbare Lagerung im Getriebe und/oder im Fahrzeug. Insbesondere ist eine solche Lagervorrichtung ausgerichtet auf eine Rotationslagerung der Kraftübertragungsvorrichtung. So können insbesondere zwei oder mehr axial voneinander beabstandete Lagerelemente für eine solche Lagervorrichtung vorgesehen sein.

Ein Vorteil ist erzielbar, wenn bei einer erfindungsgemäßen Kraftübertragungsvorrichtung der Kraftspeicher als rotatorischer Kraftspeicher ausgebildet ist, insbesondere in Form eines rotatorischen Federelementes, wobei der Schalthebelanschluss für eine rotatorische Relativbewegung zum Getriebeanschluss ausgebildet ist. Eine rotatorische Relativbewegung zum Getriebeanschluss bevorzugt insbesondere auch eine rotatorische Relativbewegung zum gesamten Fahrzeug für den Schalthebelanschluss. Ein entsprechend rotatorischer Kraftspeicher erlaubt es nun, umsetzende Getriebe zwischen unterschiedlichen Bewegungsformen zu vermeiden. Vielmehr kann der Kraftspeicher in direktem kraftschlüssigen Kontakt zum Schalthebelanschluss und zum Getriebeanschluss stehen, so dass eine reine Drehmomentspeicherung für sämtliche Relativbewegungen im Kraftspeicher möglich wird. Eine beispielhafte Ausführungsform für einen derartigen rotatorischen Kraftspeicher ist eine Torsionsfeder beziehungsweise der später noch beschriebene Torsionsstab. Selbstverständlich können auch andere Federsysteme oder Federvorrichtungen einen entsprechenden Kraftspeicher in Form von Federelementen zur Verfügung stellen. Dabei ist es selbstverständlich auch möglich, dass der Kraftspeicher in Kombination unterschiedlicher Systeme, zum Beispiel eine Federvorrichtung zusammen mit einem pneumatischen oder hydraulischen System, ausbildet. Selbstverständlich können im Kraftspeicher auch dämpfende Elemente beziehungsweise Dämpfungsvorrichtungen vorhanden sein.

Ein weiterer Vorteil ist es, wenn bei einer erfindungsgemäßen Kraftübertragungsvorrichtung gemäß dem voranstehenden Absatz die Relativbewegung des Schalthebelanschlusses als Rotationsbewegung, insbesondere um die zweite Achse, ausgebildet ist, wobei sich zwischen einer Neutralposition des Schalthebelanschlusses und einer Schaltposition des Schalthebelabschlusses ein Schaltwinkel zwischen den Ausrichtungen der Achse in diesen beiden Positionen ergibt. Beispielsweise kann ein Schaltwinkel von bis zu 20° sinnvoll sein, so dass bei einem Schalten in zwei Richtungen ± 20° einen Bewegungsspielraum von insgesamt ca. 40° für die erste Achse definieren. Die Einstellung des Schaltwinkels erfolgt dabei für die jeweilige Schaltposition auf Basis des Kraftgleichgewichtes. Dabei ist darauf hinzuweisen, dass der Schaltwinkel abhängt von dem sich zum jeweiligen Zeitpunkt einstellenden Kraftgleichgewicht im Kraftspeicher. So kann je nach Fahrsituation und je nach Gangwahl beziehungsweise Ganghöhe ein unterschiedliches Kraftgleichgewicht innerhalb des Gesamtsystems der Kraftübertragungsvorrichtung vorliegen. Damit können sich selbstverständlich auch unterschiedliche Schaltwinkel für unterschiedliche Schaltpositionen bei unterschiedlichen Gangwählhöhen einstellen. Nach dem Schalten erfolgt vorzugsweise eine Rückstellung aus der entsprechenden Schaltposition in die Neutralposition. Das bedeutet, dass zwar für die jeweilige Ganghöhe unterschiedliche Schaltpositionen möglich sind, bevorzugt jedoch eine definierte und einzige Nulllage für die Neutralposition definiert ist.

Vorteilhaft ist es ebenfalls, wenn bei einer erfindungsgemäßen Kraftübertragungsvorrichtung der Schalthebelanschluss ausgebildet ist für eine Relativbewegung zum Getriebeanschluss aus einer Neutralposition in wenigstens eine Schaltposition, wobei vorzugsweise der Kraftspeicher in der Neutralposition eine Vorspannkraft auf den Schalthebelanschluss ausübt. Darunter ist zu verstehen, dass der Kraftspeicher immer eine Schaltkraft gespeichert hat. Die minimal gespeicherte Kraft liegt dabei vorzugsweise in der Neutralposition des Schalthebelanschlusses und damit in der korrelierenden Neutralposition des Kraftspeichers vor. Diese minimale Schaltkraft im Kraftspeicher kann als Vorspannkraft bezeichnet werden. Diese Vorspannkraft dient dazu, ein statischeres Gefühl für den Fahrer und Benutzer der Kraftübertragungsvorrichtung am Schalthebelanschluss zu gewährleisten. Auch hilft sie, die Nulllage für die Neutralposition zu definieren und eine Rückführung aus der Schaltposition in die Neutralposition zu unterstützen. Selbstverständlich können zusätzlich mechanische und geometrische Anschläge vorgesehen sein, um die Neutralposition beziehungsweise die Schaltpositionen näher zu definieren oder sogar zu begrenzen. Die Vorspannung des Kraftspeichers wird dabei vorzugsweise bei der Montage in den Kraftspeicher eingebracht, so dass zu diesem Zeitpunkt eine Anpassung der Vorspannung vorzugsweise möglich wird.

Vorteilhaft ist es weiter, wenn bei einer erfindungsgemäßen Kraftübertragungsvorrichtung die Sensorvorrichtung wenigstens ein Erkennungsmittel, welches ortsfest zum Schalthebelanschluss angeordnet ist, und ein Sensormittel, welches ortsfest zum Getriebeanschluss angeordnet ist, aufweist. Das Erkennungsmittel dient dabei einer entsprechenden Erkennungsmöglichkeit für das Sensormittel. Ist die Sensorvorrichtung mit einem Hall-Sensor ausgestattet, so kann das Erkennungsmittel beispielsweise in Form eines Magneten am Schalthebelanschluss ortsfest angebracht sein. Das Sensormittel weist den entsprechenden Hall-Sensor auf, welcher nun ortsfest zum Getriebeanschluss angeordnet ist. Bei der Relativbewegung des Schalthebelanschlusses zum Getriebeanschluss erfolgt dementsprechend auch eine korrelierende und spezifische Relativbewegung des Erkennungsmittels zum Sensormittel. Dabei können Erkennungsmittel und/oder Sensormittel in doppelter Ausführung für eine redundante Auslegung vorgesehen werden. Die Anordnung des Erkennungsmittels und des Sensormittels ist dabei grundsätzlich frei. So kann das Sensormittel zum Beispiel auf der Außenseite des Schalthebels angeordnet sein. Dies kann vorne, oben, unten, hinten oder auch seitlich an der Schalteingangswelle erfolgen. Dabei kann das Sensorelement zumindest teilweise in eine Öffnung in der Schalteingangswelle insbesondere radial hineinragen. Das Erkennungsmittel könnte ebenfalls in eine derartige Öffnung von innen her hineinragen. Auch ist es möglich, dass das Erkennungsmittel sich komplett innerhalb eines Innenrohres des Schalthebelanschlusses befindet.

Ein weiterer Vorteil ist erzielbar, wenn bei einer erfindungsgemäßen Kraftübertragungsvorrichtung die Sensorvorrichtung ausgebildet ist, die erkannte Relativbewegung per drahtloser Kommunikation auszusenden. Beispielsweise kann ein Funksignal ausgesendet werden. Die notwendige Energie für diese drahtlose Kommunikation kann zum Beispiel aus einem Energiespeicher in Form einer Batterie oder eines Kondensators genommen werden. Auch ist es möglich, dass der Kraftspeicher selbst beziehungsweise die Relativbewegung zwischen Getriebeanschluss und Schalthebelanschluss eine Energieerzeugung zur Verfügung stellt, um diese drahtlose Kommunikation zu ermöglichen. Hier sei als Beispiel eine Piezo-Technik genannt, welche eine Relativbewegung in einen kurzzeitigen elektrischen Strom umsetzen kann. Eine Verkabelung ist bei einer derartigen Ausführungsform nicht mehr notwendig, so dass noch einfacher und kostengünstiger die entsprechende Nachrüstlösungsfunktionalität zur Verfügung gestellt werden kann. Bei der erfindungsgemäßen Kraftübertragungsvorrichtung weist der Kraftspeicher einen Torsionsstab auf mit einem Schaltende mit einem Schaltanschlag und einem gegenüberliegenden Getriebeende mit einem Getriebeanschlag.
Dabei weist der Schalthebelanschluss eine erste Schalthebelanschluss-Führung für den Schaltanschlag und eine zweite Schalthebelanschluss-Führung für den Getriebeanschlag auf. Der Getriebeanschluss weist eine erste Getriebeanschluss-Führung für den Schaltanschlag und eine zweite Getriebeanschluss-Führung für den Getriebeanschlag auf. Mit anderen Worten, wird eine Korrelation zwischen Kraftspeicher, Schalthebelanschluss und Getriebeanschluss durch entsprechende Anschläge und Führungen gewährleistet. Bei den Schaltenden und Getriebeenden der Torsionsstäbe handelt es sich um die jeweils diametral beabstandeten Endabschnitte. In radialer Richtung gesehen, können die Führungen des Schalthebelanschlusses und des Getriebeanschlusses zumindest teilweise überlappen. Somit geben sie in unterschiedlichen Richtungen Freiräume vor, so dass bei einer Relativbewegung des Getriebeanschlusses und des Schalthebelanschlusses sich die Führungen der beiden Bauteile relativ zueinander bewegen. Dies führt zu einer Einbringung von Torsionskraft in den Torsionsstab durch entsprechendes Mitnehmen des Schaltanschlages beziehungsweise des Getriebeanschlages durch die entsprechende Führung. Durch die Ausbildung der Führungslänge und der jeweiligen Korrelation kann in geometrischer Weise eindeutig die Nulllage definiert werden. Die Freiläufe erlauben dabei den Bewegungsspielraum für die definierte Relativbewegung. Vorzugsweise ist in Schaltanschlag und Getriebeanschlag radial beidseitig eine symmetrische und oder im Wesentlichen symmetrische Ausbildung und Abstützung vorgesehen. Dabei können die Anschläge selbstverständlich nachträglich angeordnet, zum Beispiel eingesetzte Stifte, sein. Ein rotatorischer Versatz der Anschläge in einer entspannten Situation des Torsionsstabes ermöglicht eine einfache Einbringung einer Vorspannkraft, wie sie bereits mehrfach erläutert worden ist.

Die Kraftübertragungsvorrichtung gemäß dem voranstehenden Absatz kann dahingehend weitergebildet sein, dass der Torsionsstab am Schaltende und/oder am Getriebeende eine Montageschnittstelle aufweist für die Einbringung einer Torsionskraft in den Torsionsstab. Die Montageschnittstelle kann zum Beispiel eine von der Kreisform abweichende Schnittstelle sein. So kann beispielsweise eine Schraubenzierschnittstelle oder eine Torxschnittstelle vorgesehen sein. Bei der Montage kann dementsprechend der Torsionsstab tordiert und damit mit einer Vorspannkraft versehen werden. In dieser vorgespannten Position erfolgt das Einsetzen des Schaltanschlages, um diese Vorspannkraft in der Neutralposition des Schalthebelanschlusses zu sichern und zu definieren.

Vorteilhaft bei der Verwendung eines Torsionsstabes ist es weiter, wenn bei einer erfindungsgemäßen Kraftübertragungsvorrichtung die Winkel-Position des Schaltanschlages zum Getriebeanschlag variierbar ausgebildet ist. So kann zum Beispiel eine Kreuzbohrung oder eine versetzte Bohrung innerhalb des Torsionsstabes zwei oder mehr mögliche Einsatzpositionen für einen Schaltanschlag erlauben. Eine solche Kreuzbohrung erlaubt dementsprechend eine Einstellung oder sogar eine spätere Variation der Vorspannkraft des Torsionsstabes. Selbstverständlich können die Anschläge nachträglich befestigt werden und auch nach einer längeren Einsatzdauer ausgetauscht werden.
Ein weiterer Vorteil wird erzielt, wenn bei einer erfindungsgemäßen Kraftübertragungsvorrichtung die Sensorvorrichtung eine Hauptachse aufweist, welche parallel, insbesondere koaxial, mit der Schaltachse der Schalteingangswelle ausgebildet ist. Mit anderen Worten verlängert die Sensorvorrichtung die Schalteingangswelle in axialer Richtung. Die wird insbesondere kombiniert mit einer Sensorvorrichtung, deren radiale Erstreckung kleiner oder gleich der radialen Erstreckung der Schalteingangswelle ist. Somit springt die Sensorvorrichtung von der Oberfläche der Schalteingangswelle zurück oder schlißet bündig mit dieser ab. Dies erlaubt es, eine Montage durch ein seitliches Einschieben durchzuführen. Auch wird der notwendige Platzbedarf für eine erfindungsgemäße Kraftübertragungsvorrichtung weiter reduziert.

Ein weiterer Vorteil wird erzielt, wenn bei einer erfindungsgemäßen Kraftübertragungsvorrichtung die Schalteingangswelle ein Außenrohr aufweist, wobei der Kraftspeicher innerhalb dieses Außenrohrs angeordnet ist. Damit wird ein verbesserter Schutz des Kraftspeichers erzielt. Auch die beschriebenen Relativbewegungen zwischen den einzelnen Bauteilen können auf diese Weise mit größerer Sicherheit ausgeführt werden. Ein Verschleiß oder ein unerwünschtes Verklemmen durch das Eindringen einer Verschmutzung werden wirkungsvoll vermieden. Weiter kann ein solches Außenrohr eine entsprechende Lagerung vorgeben, da das Außenrohr relativ zum Fahrzeug bzw. zum Getriebe keine Bewegung durchführt.

Ein weiterer Vorteil wird erzielt, wenn bei einer erfindungsgemäßen Kraftübertragungsvorrichtung die Sensorvorrichtung am Schalthebelanschluss oder am Getriebanschluss angeordnet ist. Mit anderen schließt die Sensorvorrichtung an einem Ende die Kraftübertragungsvorrichtung ab. Die Beeinflussung des Bauraums durch die Sensorfunktionalität wird auf diese Weise reduziert oder sogar vollständig vermieden. Auch ist ein erleichterter Zugang zu der Sensorvorrichtung, zum Beispiel für die Kabelzuführung, gegeben.

Ebenfalls Gegenstand der vorliegenden Erfindung ist ein Verfahren für die Montage einer Kraftübertragungsvorrichtung gemäß der vorliegenden Erfindung, aufweisend die folgenden Schritte:
- Zur-Verfügung-Stellen eines Schalthebelanschlusses, eines Schalthebels und eines Getriebeanschlusses,
- Befestigen eines Kraftspeichers an dem Getriebeanschluss,
- Aufladen des Kraftspeichers mit einer Vorspannkraft,
- Befestigen des mit der Vorspannkraft aufgeladenen Kraftspeichers mit dem Schalthebelanschluss.

Durch die Montage einer erfindungsgemäßen Kraftübertragungsvorrichtung können die gleichen Vorteile erzielt werden, wie sie ausführlich mit Bezug auf eine erfindungsgemäße Kraftübertragungsvorrichtung erläutert worden sind. Dabei kann selbstverständlich der Kraftspeicher in kinematischer Umkehr auch zuerst am Schalthebelanschluss und zuletzt, mit aufgeladener Vorspannkraft, am Getriebeanschluss befestigt werden. Dabei wird insbesondere die mehrfach erläuterte Montageschnittstelle, zum Beispiel in Form einer Torxschnittstelle, Verwendung finden.

Weitere Vorteile, Merkmale und Einzelheiten der Erfindung, die durch die Ansprüche definiert wird, ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen schematisch:
- Fig. 1: eine Ausführungsform einer erfindungsgemäßen Kraftübertragungsvorrichtung,
- Fig. 2: ein Beispiel einer allgemein bekannten Kraftübertragungsvorrichtung in seitlicher Schnittdarstellung,
- Fig. 3: ein weiteres Beispiel einer allgemein bekannten Kraftübertragungsvorrichtung in seitlicher Schnittdarstellung,
- Fig. 4: eine Ausführungsform der erfindungsgemäßen in Neuralsposition,
- Fig. 5: die Ausführungsform der Fig. 4 in einer ersten Schaltposition,
- Fig. 6: die Ausführungsform der Fig. 4 und 5 in einer zweiten Schaltposition,
- Fig. 7: die Ausführungsform in einer Draufsicht im Querschnitt,
- Fig. 8: die Ausführungsform in drei separaten Darstellungen in Neutralposition,
- Fig. 9: die Ausführungsform der Fig. 8 in einer ersten Schaltposition,
- Fig. 10: die Ausführungsform der Fig. 8 und 9 in einer zweiten Schaltposition,
- Fig. 11: einen ersten Montagezustand einer erfindungsgemäßen Kraftübertragungsvorrichtung,
- Fig. 12: einen nächsten Montagezustand anschließend an Fig. 11 und
- Fig. 13: einen nächsten Montagezustand anschließend an Fig. 12.

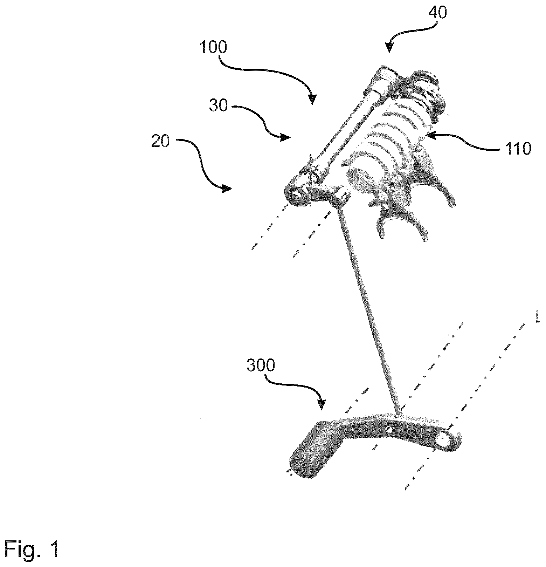

In Fig. 1 ist eine erste Ausführungsform einer Kraftübertragungsvorrichtung 100 dargestellt. Teil eines nicht dargestellten Getriebes 200 ist eine Schaltkulisse 110. Um diese für einen Schaltvorgang zurotieren erfolgt ein Einbringen einer Schaltbewegung. Dazu wird vom Fahrer des Fahrzeugs ein Schalthebel 300 mit einer Schaltbewegung beaufschlagt. In der Fig. 1 handelt es sich dabei um eine Bewegung nach unten oder nach oben für den Schalthebel 300.
Anschließend kann über ein Gestänge diese Schaltbewegung an den Schaltanschluss 20 der Kraftübertragungsvorrichtung übergeben werden. An dieser Stelle wird also die Schaltbewegung und damit auch die Schaltkraft in die erfindungsgemäße Kraftübertragungsvorrichtung 100 eingebracht. Hier erfolgt nun eine mögliche Relativbewegung zwischen dem Schalthebelanschluss 20 und dem Getriebeanschluss 40, so dass eine Zwischenspeicherung einer Schaltkraft in einem Kraftspeicher 32 erfolgt, wie er später noch näher erläutert wird.

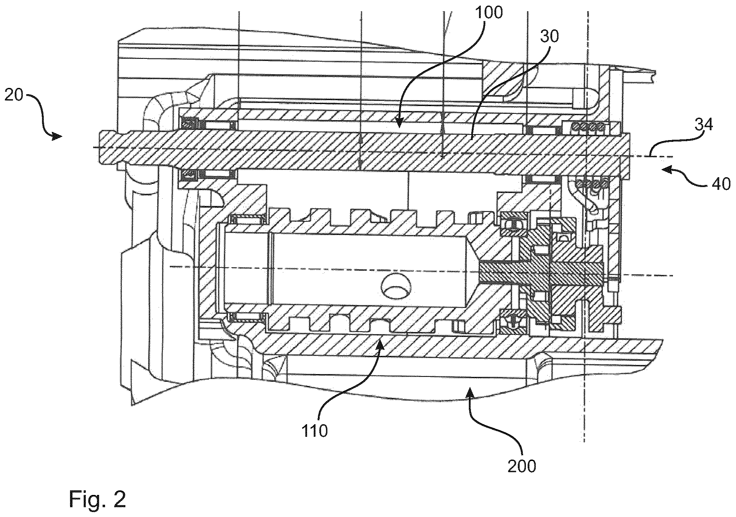

In der Fig. 2 wird schematisch im Querschnitt ein Getriebe 200 dargestellt, so dass gut die Korrelation zwischen der Schalteingangswelle 30 der allgemein bekannten Kraftübertragungsvorrichtung 100 und der Schaltkulisse 110 erkennbar ist. Auch die beiden Enden der Kraftübertragungsvorrichtung 100, also der Schalthebelanschluss 20 und der Getriebeanschluss 40 sind hier gut zu erkennen.

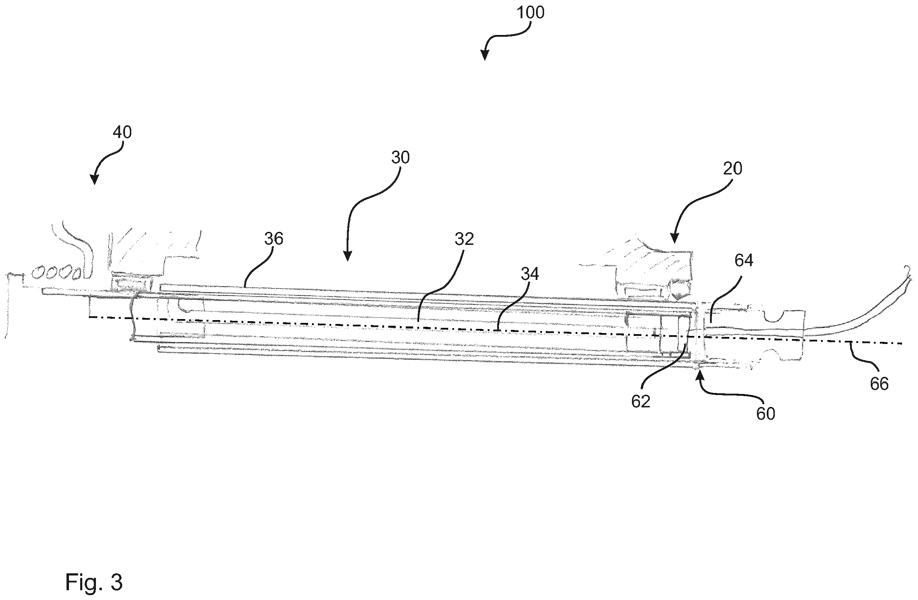

Die Fig. 3 zeigt ebenfalls in einem schematischen Querschnitt ein weiteres Beispiel einer allgemein bekannten Kraftübertragungsvorrichtung 100. Hier ist nun eine Ausbildung mit einer holen Schalteingangswelle 30 mit einem Außenrohr zu erkennen. Innerhalb dieses Außenrohres 36 befindet sich der Kraftspeicher 32. Auch ist hier gut die verlängernde Ausbildung der Sensorvorrichtung 60 zu erkennen, welche axial ein Ende der Kraftübertragungsvorrichtung 100 ausbildet.

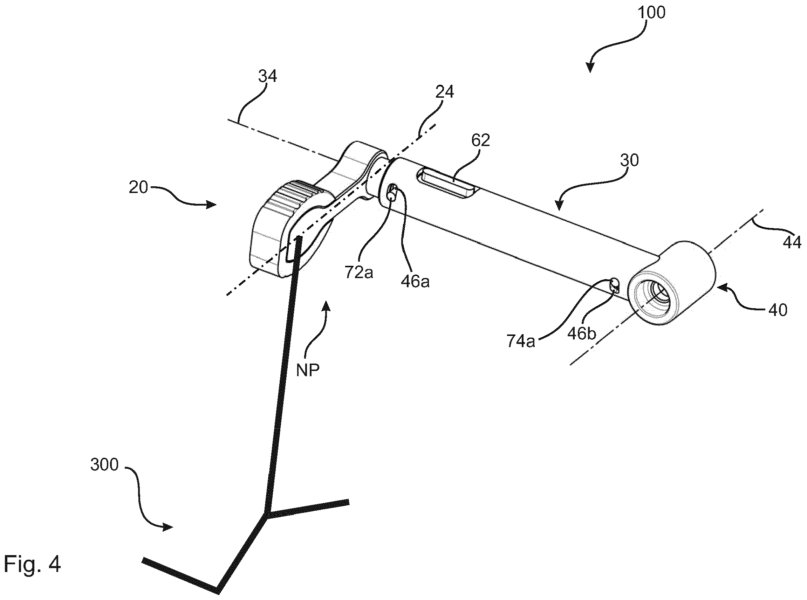

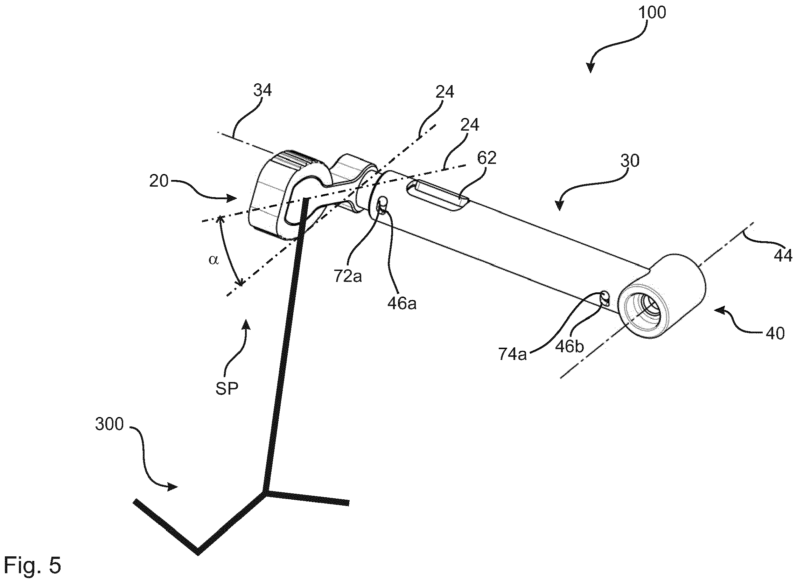

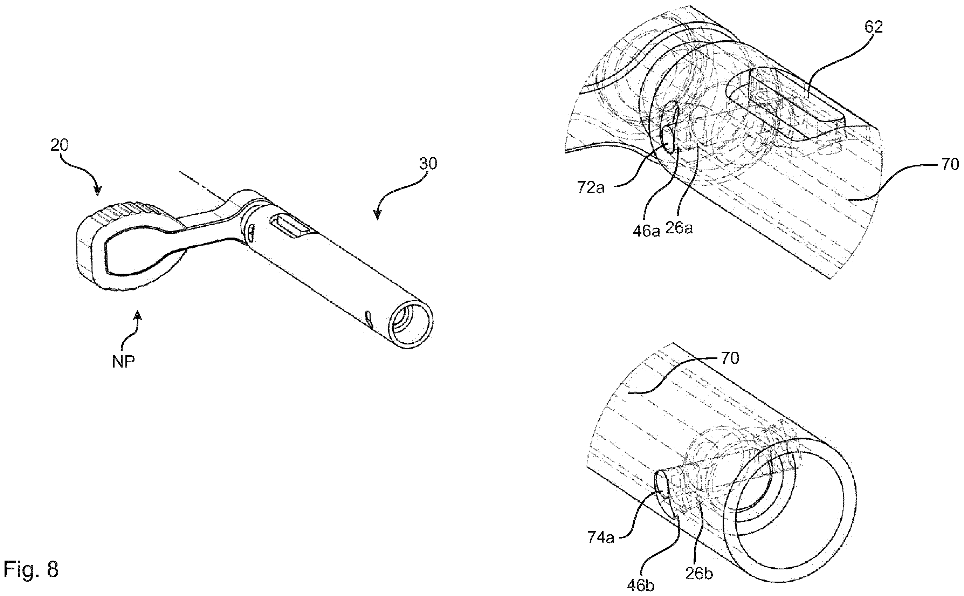

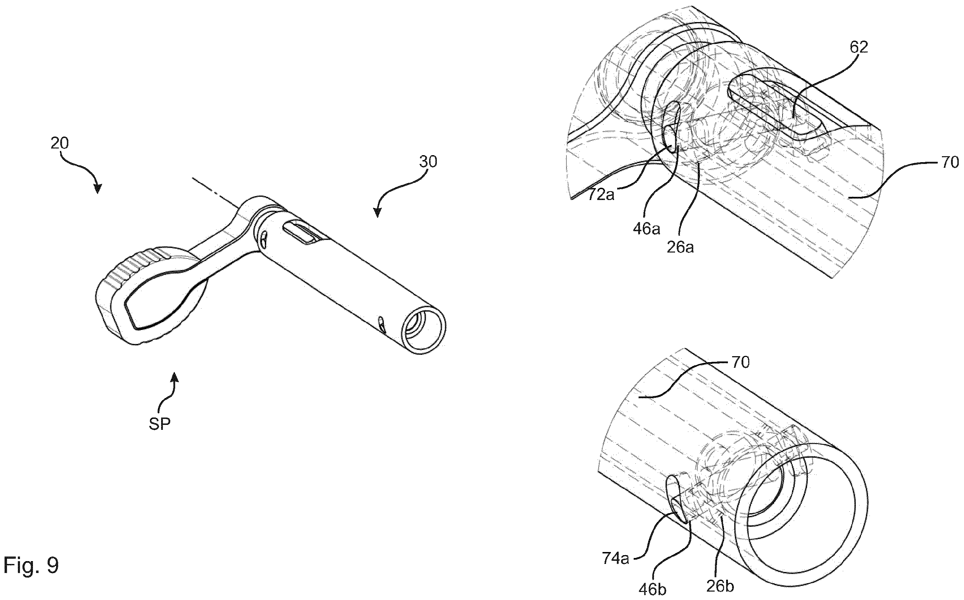

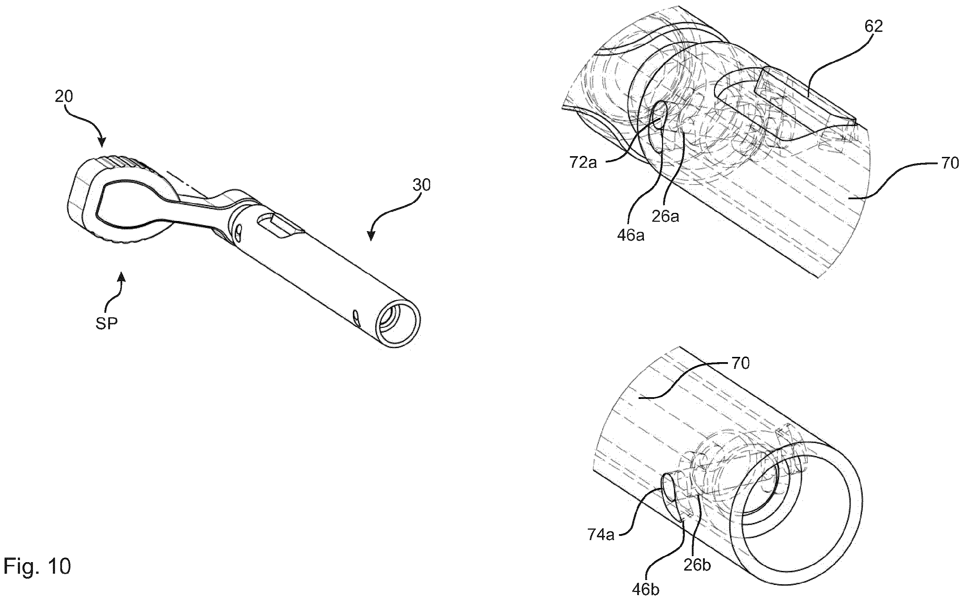

Die Fig. 4 bis 6 zeigen eine Ausführungsform einer erfindungsgemäßen Kraftübertragungsvorrichtung 100 ohne ein äußeres Gehäuse und insbesondere ohne Sensorvorrichtung 60. Dabei zeigen die drei Fig. 4 bis 6 drei unterschiedliche Positionen des Schalthebelanschlusses 20. Keine dieser drei Positionen hat jedoch einen Schaltvorgang bereits durchgeführt, sondern alle drei Positionen zeigen die Situation, kurz bevor der Schaltvorgang tatsächlich durchgeführt wird.

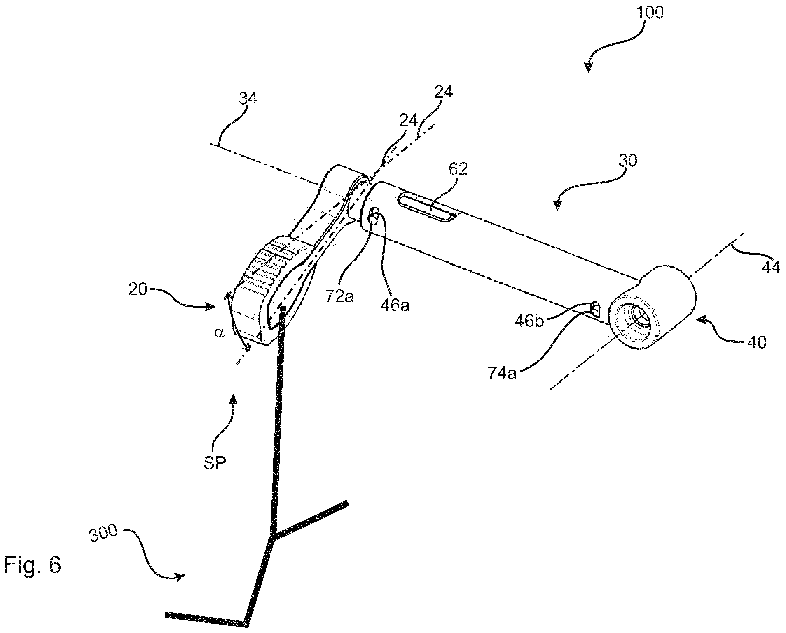

Fig. 4 zeigt dabei die Neutralposition NP des Schalthebelanschlusses 20. In dieser Neutralposition befinden sich entsprechende Schaltanschläge 72 und Getriebeanschläge 74 in zugehörigen Führungen 46a und 46b ebenfalls in einer vorgespannten Neutralposition. Das Erkennungsmittel 62 zeigt diese Neutralposition NP an. Tritt nun der Fahrer des Motorrades auf den Schalthebelanschluss 20, so findet eine Relativrotation des Schalthebelanschlusses 20 zum Getriebeanschluss 40 statt, wie sie die Fig. 6 zeigt. Der Schalthebelanschluss 20 bewegt sich nach unten, wobei für diese Relativbewegung Kraft aufgewendet werden muss, um eine Torsion des Torsionsstabes 70 innerhalb der Schalteingangswelle 30 durchzuführen. Diese Bewegung ist anhand der veränderten Korrelation der Anschläge46a und 46b in den Führungen 72a und 74a zu erkennen. Das Erkennungsmittel 62 hat sich nun in eine Position für die Schaltposition SP bewegt.
Die voranstehende Vorgehensweise findet gleichermaßen statt, wenn von unten am Schalthebelanschluss 20 dieser nach oben gedrückt wird. Auch hier wird der Schalthebelanschluss 20 von der Neutralposition NP in eine Schaltposition SP bewegt. In beiden Fällen stellt sich ein Schaltwinkel α ein, um die entsprechende Schaltposition SP zu definieren.
Ausgehend von den Positionen gemäß den Fig. 5 und 6, ist ein Kraftgleichgewicht vorhanden zwischen der Schaltkraft im Kraftspeicher 32 und der notwendigen Schaltgegenkraft aus dem Getriebe 200. Zu diesem Zeitpunkt findet nun der Schaltvorgang statt, wodurch sich die Gegenkraft im Getriebe 200 reduziert und zumindest ein Teil der Schaltkraft, welche im Kraftspeicher 32 gespeichert ist, freigegeben wird. Gemäß der Fig. 5 bewegt sich nun der Schalthebel 300 nach unten und der Schaltwinkel α reduziert sich wieder auf 0°, so dass die gesamte Schalthebelvorrichtung 10 ausgehend von der Fig. 6 in die neutrale Position gelangt.

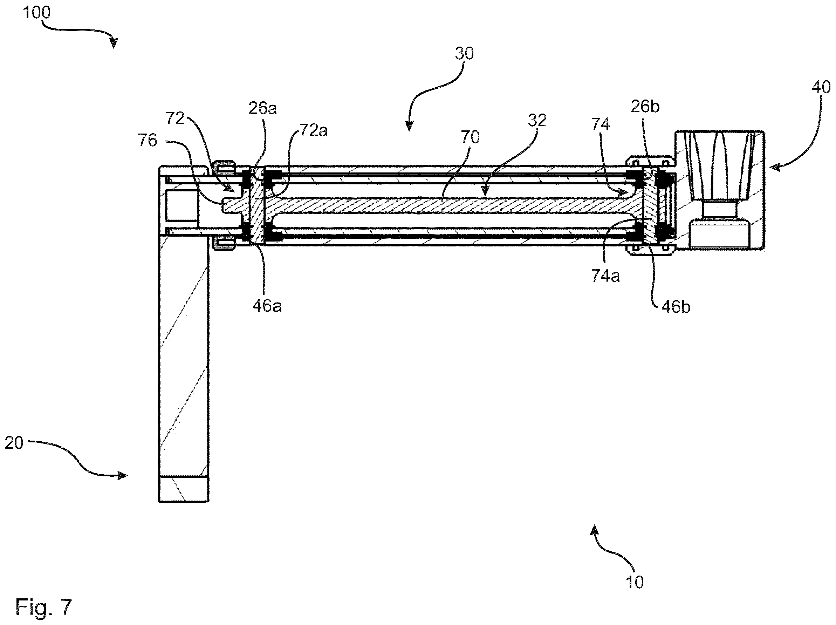

In Fig. 7 ist in einer schematischen Draufsicht im Querschnitt gut zu erkennen, wie der Kraftspeicher 32 in Form eines Torsionsstabes 70 ausgebildet sein kann. Die entsprechenden Anschläge in Form des Schaltanschlages 72a und des Getriebeanschlages 74a sind am entsprechenden Schaltende 72 und am Getriebeende 74 angeordnet. Ebenfalls Teil des Schaltendes 72 ist eine Montageschnittstelle 76 mit einem von der Kreisform abweichenden Querschnitt, um die später noch beschriebene Montage durchzuführen. Bei den beiden Anschlägen 72a und 74a handelt es sich um eingesetzte Stifte, um in Eingriff mit den zugehörigen Führungen 46a, 46b, 26a und 26b zu gelangen.
Anhand der Fig. 8, 9 und 10 wird nun die Korrelation des Kraftspeichers 32 in Form des Torsionsstabes 70 zu den weiteren Bauteilen beschrieben. Jede dieser Fig. 8 bis 10 zeigt dabei nochmals die Positionen gemäß der Fig. 4 bis 6, jedoch in zwei Ausschnitten zusätzlich die Korrelation des Schaltendes 72 und des Getriebeendes 74 des Torsionsstabes 70 innerhalb des Schalteingangswelle 30. Bei den entsprechenden Führungen handelt es sich um Langlöcher, welche miteinander überlappen. In Fig. 8 ist die Neutralposition NP des Schalthebelanschlusses 20 dargestellt. Am Schaltende 72 des Torsionsstabes 70 befindet sich der Schaltanschlag 72a in einer Position, in welcher der Freilauf der beiden Führungen 26a und 46a nach oben gegeben ist. Am gegenüberliegenden Getriebeende 74 des Torsionsstabes 70 befindet sich der Getriebeanschlag 74a in einer Position, in welcher der Freilauf der beiden Führungen 26b und 46b noch unten gegeben ist. Durch den entgegengesetzt ausgerichteten Freilauf dieser Führungen 46a, 46b, 26a und 26b ist gewährleistet, dass diese Neutralposition NP insbesondere in vorgespannter Weise eine definierte Nulllage ausbildet.
Findet nun eine Bewegung statt, wie sie als Relativbewegung mit Bezug auf die Fig. 4 bis 6 näher erläutert worden ist, so verändern sich die Relationen zwischen den Führungen 26a, 26b, 46a, 46b und den entsprechenden Anschlägen 72a und 74a wie folgt. Bei der Schaltposition SP gemäß Fig. 9 hat sich der Schalthebelanschluss 20 nach unten bewegt. Nunmehr haben sich die Freiläufe der Führungen 26a und 46a beziehungsweise 26b und 46b so miteinander verschoben, dass sie durch eine Bewegung des jeweiligen Anschlages 74a bzw. 72a teilweise mitgenommen worden sind. Dies führt zum Einen zur Mitnahme des Erkennungsmittels 62 zum Anzeigen der Schaltposition SP und zum Anderen zu einer Erhöhung der Tordierung, nämlich des Relativwinkels zwischen diesen beiden Stiften in Form der Anschläge 72a und 74a. Gleiches erfolgt auch bei einer konträren Bewegung in eine entgegensetzte Schaltposition SP, wie sie die Fig. 10 zeigt. Hier ist gut zu erkennen, wie einfach und kostengünstig durch entsprechende geometrische Korrelation der Führungen 26a, 26b, 46a und 46b definierte Neutralpositionen NP und sogar entsprechende Endanschläge über die Schaltpositionen SP definierbar sind.

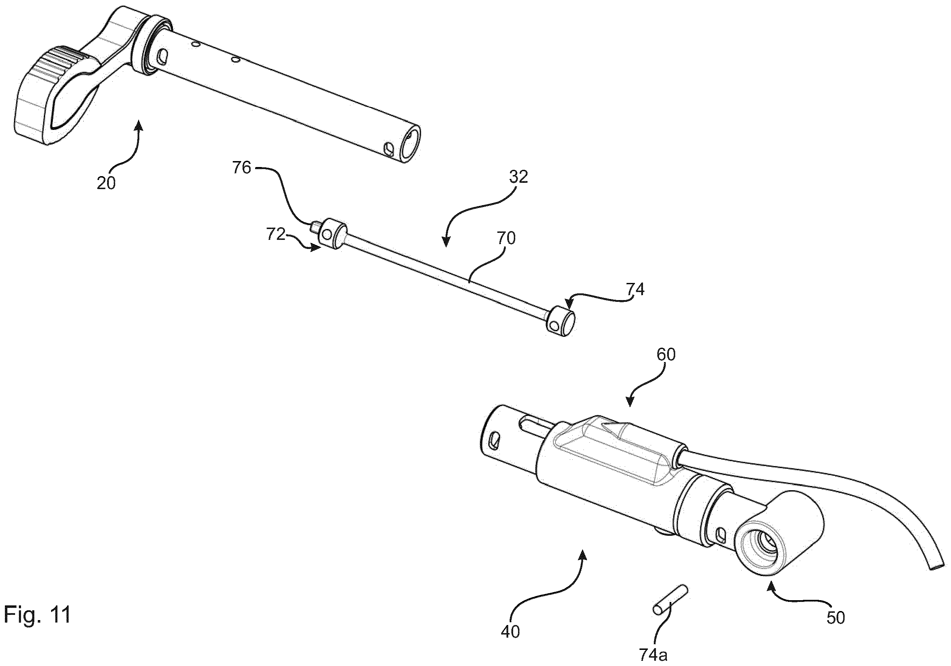

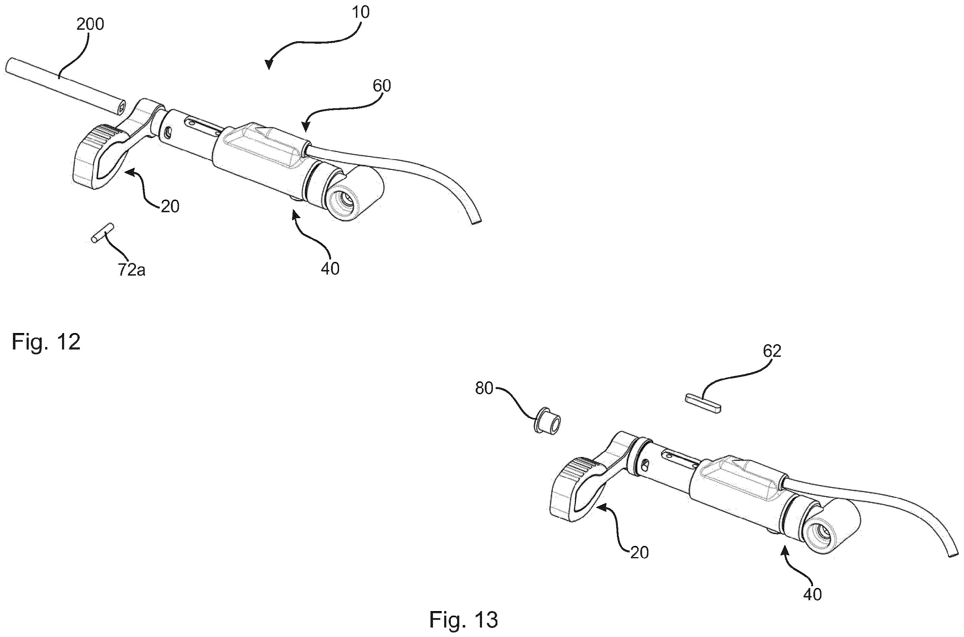

Die Fig. 11, 12 und 13 zeigen eine Montagemöglichkeit für eine erfindungsgemäße Kraftübertragungsvorrichtung 100. Ausgehend von Fig. 10 erfolgt die Montage durch ein Einschieben des Torsionsstabes 70 in den Schalthebelanschluss 20. Dabei sind zwei im Winkel zueinander versetzte Bohrungen an dem Schaltende 72 beziehungsweise dem Getriebeende 74 des Torsionsstabes 70 zu erkennen. Nach dem Einsetzen erfolgt ein Aufschieben des Getriebeanschlusses 40 und damit des Schalthebels 30, so dass final zu diesem Schritt als Stift ein Getriebeanschlag 74a eingesetzt werden kann. In dieser Position ist in Fig. 12 eine montierte Variante gezeigt. Mithilfe eine Montagewerkzeuges 200 kann nun an der Montageschnittstelle 76 eine Vorspannkraft in Form einer Torsion in den Torsionsstab 70 eingebracht werden. Sobald eine entsprechende Deckung der Bohrung am Schaltende 72 mit den zugehörigen Führungen 46a und 26a vorliegt, wird der entsprechende, als Stift ausgebildete Schaltanschlag 72a eingeschoben und damit die Vorspannkraft fixiert. Final wird gemäß Fig. 12 noch eine Abdeckung 80 aufgesetzt, um eine Wasserdichtigkeit zu gewährleisten sowie ein Magnet als Erkennungsmittel 62 angebracht. Wird nun noch das wasserdichte verspritzte Gehäuse der Sensorvorrichtung 60 übergeschoben, so wird die Kraftübertragungsvorrichtung 100 finalisiert.
Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen, die durch die nachfolgenden Ansprüche definiert wird.

### Bezugszeichen

- 20: Schalthebelanschluss
- 24: Achse
- 26a: erste Schalthebelanschluss-Führung
- 26b: zweite Schalthebelanschluss-Führung
- 30: Schalteingangswelle
- 32: Kraftspeicher
- 34: Schaltachse
- 36: Außenrohr
- 40: Getriebeanschluss
- 44: Achse
- 46a: erste Getriebeanschluss-Führung
- 46b: zweite Getriebeanschluss-Führung
- 60: Sensorvorrichtung
- 62: Erkennungsmittel
- 64: Sensormittel
- 66: Hauptachse der Sensorvorrichtung
- 70: Torsionsstab
- 72: Schaltende
- 72a: Schaltanschlag
- 74: Getriebeende
- 74a: Getriebeanschlag
- 76: Montageschnittstelle

- 100: Kraftübertragungsvorrichtung
- 110: Schaltkulisse
- 200: Getriebe
- 300: Schalthebel

- NP: Neutralposition
- SP: Schaltposition
- α: Schaltwinkel

## Patentansprüche

1. Kraftübertragungsvorrichtung (100) für ein Getriebe (200), insbesondere eines Motorrades, mit einem Schaltassistenzsystem, aufweisend eine Schalteingangswelle (30) mit einem Schalthebelanschluss (20) zur Aufnahme einer Schaltbewegung eines Schalthebels (300) und einem Getriebeanschluss (40) zur Weiterleitung der Schaltbewegung an eine Schaltkulisse (110) des Getriebes (100), wobei die Schalteingangswelle (30) einen Kraftspeicher (32) für die Zwischenspeicherung wenigstens eines Teils der Schaltkraft aufweist, so dass eine Relativbewegung zwischen dem Schalthebelanschluss (20) und dem Getriebeanschluss (40) unter Änderung der im Kraftspeicher (32) gespeicherten Schaltkraft erfolgen kann, wobei die Schalteingangswelle (30) eine Sensorvorrichtung (60) aufweist für die Erkennung der Relativbewegung zwischen dem Schalthebelanschluss (20) und dem Getriebeanschluss (40), **dadurch gekennzeichnet, dass** der Kraftspeicher () einen Torsionsstab (70) aufweist mit einem Schaltende (72) mit einem Schaltanschlag (72a) und einem gegenüberliegenden Getriebeende (74) mit einem Getriebeanschlag (74a), wobei der Schalthebelanschluss (20) eine erste Schalthebelanschluss-Führung (26a) für den Schaltanschlag (72a) und eine zweite Schalthebelanschluss-Führung (26b) für den Getriebeanschlag (74a) und der Getriebeanschluss (40) eine erste Getriebeanschluss-Führung (46a) für den Schaltanschlag (72a) und eine zweite Getriebeanschluss-Führung (46b) für den Getriebeanschlag (74a) aufweist..

2. Kraftübertragungsvorrichtung (100) nach einem der vorangegangenen Ansprüche **dadurch gekennzeichnet, dass** der Kraftspeicher (32) als rotatorischer Kraftspeicher (32) ausgebildet ist, wobei der Schalthebelanschluss (20) für eine rotatorische Relativbewegung zum Getriebeanschluss (40) ausgebildet ist.

3. Kraftübertragungsvorrichtung (100) nach einem der vorangegangenen Ansprüche **dadurch gekennzeichnet, dass** die Relativbewegung des Schalthebelanschlusses (20) als Rotationsbewegung ausgebildet ist, wobei sich zwischen einer Neutralposition (NP) des Schalthebelanschlusses (20) und einer Schaltposition (SP) des Schalthebelanschlusses (20) ein Schaltwinkel (α) zwischen diesen beiden Positionen ergibt.

4. Kraftübertragungsvorrichtung (100) nach einem der vorangegangenen Ansprüche **dadurch gekennzeichnet, dass** der Schalthebelanschluss (20) ausgebildet ist für eine Relativbewegung zum Getriebeanschluss (40) aus einer Neutralposition (NP) in wenigstens eine Schaltposition (SP), wobei vorzugsweise der Kraftspeicher (32) in der Neutralposition (NP) eine Vorspannkraft auf den Schalthebelanschluss (20) ausübt.

5. Kraftübertragungsvorrichtung (100) nach einem der vorangegangenen Ansprüche **dadurch gekennzeichnet, dass** die Sensorvorrichtung (60) wenigstens ein Erkennungsmittel (62), welches ortsfest zum Schalthebelanschluss (20) angeordnet ist, und ein Sensormittel (64), welches ortsfest zum Getriebeanschluss (40) angeordnet ist, aufweist.

6. Kraftübertragungsvorrichtung (100) nach einem der vorangegangenen Ansprüche **dadurch gekennzeichnet, dass** die Sensorvorrichtung (60) ausgebildet ist die erkannte Relativbewegung per drahtloser Kommunikation auszusenden.

7. Kraftübertragungsvorrichtung (100) nach einem der vorangegangenen Ansprüche, **dadurch gekennzeichnet, dass** der Torsionsstab (70) am Schaltende (72) und/oder am Getriebeende (74) eine Montageschnittstelle (76) aufweist für die Einbringung einer Torsionskraft in den Torsionsstab (70).

8. Kraftübertragungsvorrichtung (100) nach einem der vorangehenden Ansprüche, **dadurch gekennzeichnet, dass** die Winkelposition des Schaltanschlages (72a) zum Getriebeanschlag (74a) variierbar ausgebildet ist.

9. Kraftübertragungsvorrichtung (100) nach einem der vorangegangenen Ansprüche, **dadurch gekennzeichnet, dass** die Sensorvorrichtung (60) eine Hauptachse (66) aufweist, welche parallel, insbesondere koaxial, mit der Schaltachse (34) der Schalteingangswelle (30) ausgebildet ist.

10. Kraftübertragungsvorrichtung (100) nach einem der vorangegangenen Ansprüche, **dadurch gekennzeichnet, dass** die Schalteingangswelle (30) ein Außenrohr (36) aufweist, wobei der Kraftspeicher (32) innerhalb dieses Außenrohrs (36) angeordnet ist.

11. Kraftübertragungsvorrichtung (100) nach einem der vorangegangenen Ansprüche, **dadurch gekennzeichnet, dass** die Sensorvorrichtung (60) am Schalthebelanschluss (20) oder am Getriebeanschluss (40) angeordnet ist.

12. Verfahren für die Montage einer Kraftübertragungsvorrichtung (100) mit den Merkmalen eines der Ansprüche 1 bis 11, aufweisend die folgenden Schritte:
- Zur Verfügung stellen eines Schalthebelanschlusses (20), einer Schalteingangswelle (30) und eines Getriebeanschlusses (40),
- Befestigen eines Kraftspeichers (32) an dem Getriebeanschluss (40),
- Aufladen des Kraftspeichers (32) mit einer Vorspannkraft,
- Befestigen des mit der Vorspannkraft aufgeladenen Kraftspeichers (32) mit dem Schalthebelanschluss (20).

## Claims

1. A force transmission device (100) for a transmission (200), in particular of a motorcycle, with a shift assist system, provided with a shift input shaft (30) with a shift lever connection (20) for receiving a shifting motion of a shift lever (300) and a transmission connection (40) for transmitting the shifting motion to a shift gate (110) of the transmission (100), wherein the shift input shaft (30) has an energy accumulator (32) for intermediate storage of at least a part of the shifting force, such that the relative motion between the shift lever connection (20) and the transmission connection (40) may be obtained by varying the shifting force stored in the energy accumulator (32), wherein the shift input shaft (30) has a sensor device (60) for detecting the relative motion between the shift lever connection (20) and the transmission connection (40), **characterized in that** the energy accumulator (32) has a torque rod (70) with a shift end (72) with a shift stop (72a) and an opposite transmission end (74) with a transmission stop (74a), wherein the shift lever connection (20) has a first shift lever connection guide (26a) for the shift stop (72a) and a second shift lever connection guide (26b) for the transmission stop (74a) and the transmission connection (40) has a first transmission connection guide (46a) for the shift stop (72a) and a second transmission connection guide (46b) for the transmission stop (74a).

2. The force transmission device (100) according to any of the preceding claims, **characterized in that** the energy accumulator (32) is provided as a rotational energy accumulator (32), wherein the shift lever connection (20) is adapted for performing a rotational relative motion with respect to the transmission connection (40).

3. The force transmission device (100) according to any of the preceding claims, **characterized in that** the relative motion of the shift lever connection (20) is a rotational motion, wherein a shift angle (α) is obtained between a neutral position (NP) of the shift lever connection (20) and a shift position (SP) of the shift lever connection (20).

4. The force transmission device (100) according to any of the preceding claims, **characterized in that** the shift lever connection (20) is adapted for relative motion with respect to the transmission connection (40) from a neutral position (NP) to at least one shift position (SP), wherein the energy accumulator (32) in the neutral position (NP) preferably exerts a biasing force on the shift lever connection (20).

5. The force transmission device (100) according to any of the preceding claims, **characterized in that** the sensor device (60) has at least one detection means (62), which is arranged in a stationary position with respect to the shift lever connection (20), and a sensor means (64), which is arranged in a stationary position with respect to the transmission connection (40).

6. The force transmission device (100) according to any of the preceding claims, **characterized in that** the sensor device (60) is adapted to transmit the detected relative motion via wireless communication.

7. The force transmission device (100) according to any of the preceding claims, **characterized in that** the torque rod (70) has a mounting interface (76) on its shift end (72) and/or on its transmission end (74) for transmitting a torsion force to the torque rod (70).

8. The force transmission device (100) according to any of the preceding claims, **characterized in that** the angular position of the shift stop (72a) relative to the transmission stop (74a) may be varied.

9. The force transmission device (100) according to any of the preceding claims, **characterized in that** the sensor device (60) has a main axis (66), which is parallel, in particular coaxial, to the shift axis (34) of the shift input shaft (30).

10. The force transmission device (100) according to any of the preceding claims, **characterized in that** the shift input shaft (30) has an outer tube (36), wherein the energy accumulator (32) is positioned within this outer tube (36).

11. The force transmission device (100) according to any of the preceding claims, **characterized in that** the sensor device (60) is positioned on the shift lever connection (20) or on the transmission connection (40).

12. A method for mounting a force transmission device (100) having the characteristics of any of claims 1 to 11, having the following steps:
- providing a shift lever connection (20), a shift input shaft (30) and a transmission connection (40),
- attaching an energy accumulator (32) to the transmission connection (40),
- applying a preload force on the energy accumulator (32),
- attaching the energy accumulator (32), which is subject to the preload force, to the shift lever connection (20).

## Revendications

1. Dispositif de transmission de force (100) pour une boîte de vitesses (200), en particulier d'une motocyclette, avec un système d'assistance de changement de vitesse, présentant un arbre d'entrée de changement de vitesse (30) avec une connexion de levier de vitesses (20) pour recevoir un mouvement de changement de vitesse d'un levier de vitesses (300) et une connexion de boîte de vitesses (40) pour transférer le mouvement de changement de vitesse à une coulisse de changement de vitesse (110) de la boîte de vitesses (100), dans lequel l'arbre d'entrée de changement de vitesse (30) présente un accumulateur de force (32) pour le stockage intermédiaire d'au moins une partie de la force de changement de vitesse de sorte qu'un mouvement relatif entre la connexion de levier de vitesses (20) et la connexion de boîte de vitesses (40) puisse se faire en modifiant la force de changement de vitesse stockée dans l'accumulateur de force (32), dans lequel l'arbre d'entrée de changement de vitesse (30) présente un dispositif de détection (60) pour reconnaître le mouvement relatif entre la connexion de levier de vitesses (20) et la connexion de boîte de vitesses (40), **caractérisé en ce que** l'accumulateur de force (32) présente un axe de torsion (70) avec une extrémité de changement de vitesse (72) avec une butée de changement de vitesse (72a) et une extrémité de boîte de vitesses opposée (74) avec une butée de boîte de vitesses (74a), dans lequel la connexion de levier de vitesses (20) présente un premier guide de connexion de levier de vitesses (26a) pour la butée de changement de vitesse (72a) et un second guide de connexion de levier de vitesses (26b) pour la butée de boîte de vitesses (74a) et la connexion de boîte de vitesses (40) un premier guide de connexion de boîte de vitesses (46a) pour la butée de changement de vitesse (72a) et un second guide de connexion de boîte de vitesses (46b) pour la butée de boîte de vitesses (74a).

2. Dispositif de transmission de force (100) selon l'une quelconque des revendications précédentes, **caractérisé en ce que** l'accumulateur de force (32) se présente sous la forme d'un accumulateur de force rotatif (32), dans lequel la connexion de levier de vitesses (20) est conçu pour un mouvement relatif rotatif vis-à-vis de la connexion de boîte de vitesses (40).

3. Dispositif de transmission de force (100) selon l'une quelconque des revendications précédentes, **caractérisé en ce que** le mouvement relatif de la connexion de levier de vitesses (20) se présente sous la forme d'un mouvement rotatif, dans lequel, entre une position neutre (NP) de la connexion de levier de vitesses (20) et une position de changement de vitesse (SP) de la connexion de levier de vitesses (20), un angle de changement de vitesse (α) se produit entre ces deux positions.

4. Dispositif de transmission de force (100) selon l'une quelconque des revendications précédentes, **caractérisé en ce que** la connexion de levier de vitesses (20) est conçue pour un mouvement relatif vis-à-vis de la connexion de boîte de vitesses (40) d'une position neutre (NP) à au moins une position de changement de vitesse (SP), dans lequel l'accumulateur de force (32) en position neutre (NP) exerce de préférence une force de pré-tension sur la connexion de levier de vitesses (20).

5. Dispositif de transmission de force (100) selon l'une quelconque des revendications précédentes, **caractérisé en ce que** le dispositif de détection (60) présente au moins un moyen de reconnaissance (62) qui est agencé fixe vis-à-vis de la connexion de levier de vitesses (20) et un moyen de détection (64) qui est agencé fixe vis-à-vis de la connexion de boîte de vitesses (40).

6. Dispositif de transmission de force (100) selon l'une quelconque des revendications précédentes, **caractérisé en ce que** ledit dispositif de détection (60) est conçu pour envoyer le mouvement relatif reconnu par communication sans fil.

7. Dispositif de transmission de force (100) selon l'une quelconque des revendications précédentes, **caractérisé en ce que** l'axe de torsion (70) présente à l'extrémité de changement de vitesse (72) et/ou à l'extrémité de boîte de vitesse (74) une interface de montage (76) pour l'application d'une force de torsion à l'axe de torsion (70).

8. Dispositif de transmission de force (100) selon l'une quelconque des revendications précédentes, **caractérisé en ce que** la position angulaire de la butée de changement de vitesse (72a) est conçue de manière variable vis-à-vis de la butée de boîte de vitesses (74a).

9. Dispositif de transmission de force (100) selon l'une quelconque des revendications précédentes, **caractérisé en ce que** le dispositif de détection (60) présente un axe principal (66) qui est conçu parallèle, en particulier coaxial, avec l'axe de changement de vitesse (34) de l'arbre d'entrée de changement de vitesse (30).

10. Dispositif de transmission de force (100) selon l'une quelconque des revendications précédentes, **caractérisé en ce que** l'arbre d'entrée de changement de vitesse (30) présente un tube externe (36), dans lequel l'accumulateur de force (32) est agencé à l'intérieur de ce tube externe (36).

11. Dispositif de transmission de force (100) selon l'une quelconque des revendications précédentes, **caractérisé en ce que** le dispositif de détection (60) est agencé dans la connexion de levier de vitesses (20) ou dans la connexion de boîte de vitesse (40).

12. Procédé de montage d'un dispositif de transmission de force (100) ayant les caractéristiques de l'une quelconque des revendications 1 à 11, présentant les étapes suivantes :
- mise à dispositif d'une connexion de levier de vitesses (20), d'un arbre d'entrée de changement de vitesse (30) et d'une connexion de boîte de vitesses (40),
- fixation d'un accumulateur de force (32) à la connexion de boîte de vitesses (40),
- chargement de l'accumulateur de force (32) par une force de pré-tension,
- fixation de l'accumulateur de force (32) chargé par la force de pré-tension à la connexion de levier de vitesses (20).
